Europäisches Patentamt

(19) European Patent Office

Office européen des brevets

(11) Publication number: **0 075 060**
**A2**

# EUROPEAN PATENT APPLICATION

(21) Application number: 81830181.4

(22) Date of filing: 02.10.81

(51) Int. Cl.³: **C 10 B 53/00**

(30) Priority: 21.09.81 IT 4933381

(71) Applicant: **De Marco, Vincenzo, Via Cingoli, 26, I-00156 Roma (IT)**
Applicant: **De Marco, Luigi, Via Cingoli, 26, I-00156 Roma (IT)**

(43) Date of publication of application: 30.03.83
**Bulletin 83/13**

(72) Inventor: **De Marco, Vincenzo, Via Cingoli, 26, I-00156 Roma (IT)**
Inventor: **De Marco, Luigi, Via Cingoli, 26, I-00156 Roma (IT)**

(84) Designated Contracting States: **AT BE CH DE FR GB LI NL SE**

(74) Representative: **Mascioli, Alessandro, Prof.Dr., c/o A.N.D.I. Associazione Nazionale degli Inventori Via Lima, 35, I-00198 Roma (IT)**

(54) **Device for transforming rubber, plastic materials and urban waste with recovery of mixtures of liquid hydrocarbons and coal, plus combustion procedure.**

(57) Device equipped with a weighing furnace with cooled column and moveable metal bell, hinged and water cooled, for transforming rubber, plastic materials and urban waste with recovery of mixtures of liquid hydrocarbons and coal using a timed combustion procedure.

COMPLETE DOCUMENT

Device for transforming rubber, plastic materials and
urban waste with recovery of mixtures of liquid hydro-
carbons and coal, plus combustion procedure

This invention concerns a device for transforming rubber, plastic material and organic wastes which, through
a timed combustion procedure, allows the recovery of
mixtures of liquid hydrocarbons and coal in a closed
cycle, with no gaseous residues.

One of the more compelling problems of industrialized
society consists of the accumulation of urban wastes,
automobile tires and various plastic materials, and
thus the necessity for their elimination.

The combustion procedures currently used are not only
costly but also highly polluting due to the high per-
centage of smoke and carbon and other particles which
are released to the atmosphere.

The aim of this invention is to eliminate said wastes
and materials in a very ecologically sound way, in a
closed cycle with no gaseous residues, with consequent
preparation as transformation products of liquid and solid
fuels in high yield.

This aim is achieved through an original combustion
procedure in a device equipped with a weighing furnace.

The device covered by this invention comprises an annealing furnace with two cooling systems, a system to collect the final products and to treat the gases, a dust laying system, and finally a water purification system for the effluent liquid.

The timed combustion procedure consists of gradually raising the temperature in an approximately 1 hour period to 400°C to 600°C; the materials under treatment are in a hermetically sealed chamber in the furnace and may be heated by the combustion of products from a previous cycle in a chamber below the former. By maintaining the maximum temperature for two hours, the volatile components of the organic materials are driven off through a suitable opening in said hermetic chamber and pass into a cooling ocil where they condense and are collected as liquids at room temperature.

Experience shows that treatment of tires and rubber in general affords a mixture of liquid hydrocarbons in an approximately 60% yield, while plastic materials give different mixtures in yields up to 90%. Even urban wastes can give 30% yields.

As suggested by the above discussion, the presence of a treatment residue has been shown, accounting for 100% of the original material in each case, in the combustion chamber of the furnace. Said residue consists mainly of coal, analogous to coke, of high caloric power, steel (in the case of tires) and ash, suitable for treating soil.

Furthermore, to dispose of all the above mentioned solid wastes, the procedure of this invention requires that the feed to the furnace be interrupted and the temperature be lowered to approximately 120°C, when the furnace container may be emptied onto the scales and said resides removed.

As already shown, 50% of this same coal from each cycle, in the form of coarse pieces obtained from cold processing, can be used to fuel the combustion of the next cycle.  The rest may be used for any other requirements in boilers, furnaces and the like.

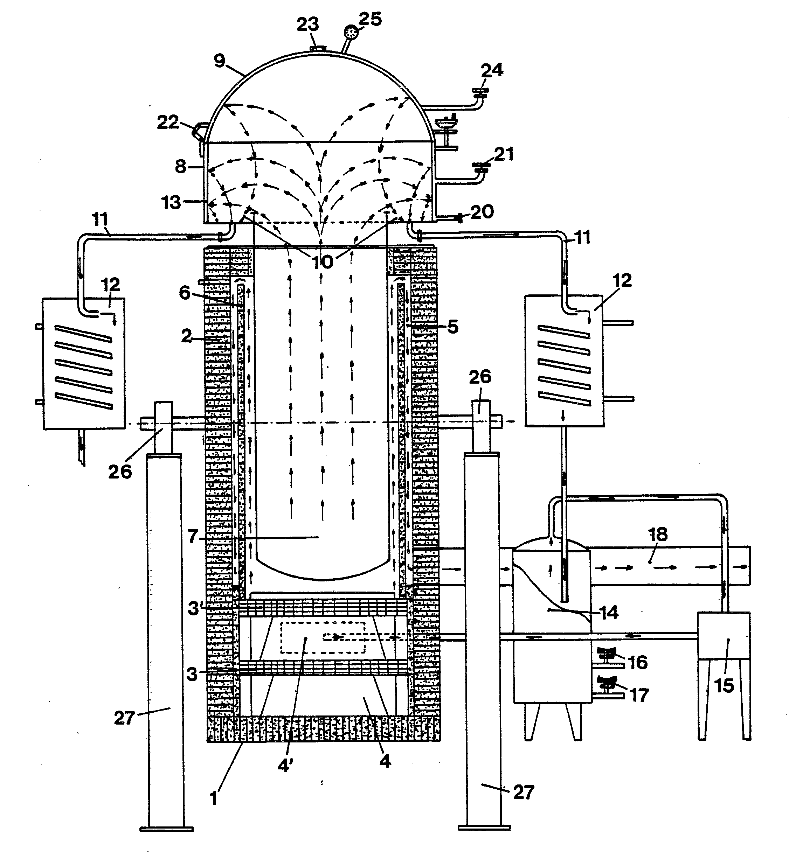

A preferred embodiment of the invention is shown in transverse section in the enclosed drawing.

As shown in detail in the drawing, the annealing furnace consists of a metal cylinder 1, a weighing cylinder since it is placed on pins 26 and supports 27, insulating along the entire side and bottom surface, with isolating bricks 2, with grills 3 and 3' in the lower part to form a subfurnace 4 to collect ash and furnace 4' for combustion, fueled by coal and recycled gas from the previous runs.  On the inside, air space 5 created along the entire side surface by the layer of firebricks 6 allows a double course for the fumes and combustion products which in this way lose their heat content to the boiler 7 before escaping; in said steel boiler the raw materials are loaded and treated thermally. The upper part of said boiler 7 contains a steel column in air space 13 cooled by means of water intake 20 and tap 21 and bearing the moveable metal bell 9, hinged on 22, water cooled by means of water intake 23 and tap 24. A circular crown tank 10 is made inside said boiler 8 to collect the product liquids, which are sent through collection tubes 11 to refrigeration systems 12 consisting of coils in a cold water bath. This cooling circuit is completely separate, with the product liquids and gases never entering it.

At the bottom of said column 8 there may be a steel screen filter 13 filled with glass wool covered with powdered lime to capture any chlorine compounds evaporating out of the boiler 7 below, only during the treatment of certain plastic wastes.

The cooled liquid mixed with uncondensed gases coming from the refrigeration systems 12 reaches collection tank 14 where the components are deposited at various levels as a function of their density, while the gases flow toward the top and are collected in the transport bell 15, from where they are sent for combustion in the furnace 4! The liquid petroleum derivatives on the other hand are sent by means of tap 16 (a valve or the like) to the storage tank for finished products, while the aqueous condensate is drawn by means of tap 17 from the bottom of tank 14, where they have precipitated due to their specific gravity. They are then sent to the decantation tanks for subsequent re-use.

The fumes from the furnace are transported through tight seal pipe 18 to a dust laying device of known type.

The manometer 25 and any thermometers control the temperature of the furnace and the boiler 7.

The device functions as follows: the raw materials to be treated are loaded in boiler 7; weighing furnace 1 on pins 26 is set in a vertical position and the upper moveable metal bell 9 is hermetically sealed. By means of combustion furnace 4', the temperature of the furnace is raised according to the times and modalities of the procedure described. Hydrocarbon components in the gas state are formed in boiler 7, as a function of the chemico-physical dissociation of the raw materials contained therein. These products in the evaporation phase reach the upper part of the boiler 7, in which they are made to pass through the filter 13 to reach the column 8 and metal bell 9 above. Upon contact with the surface of these, they condense and precipitate in the circular crown collection tank 10; the liquids obtained then flow toward the cooling coils 12.

0075060

Pressures above atmospheric pressure never develop in the furnace.

Uncondensed gases also flow from the bell 8 to the cooling coils 12. If they are still volatile, they are then recycled for combustion.

In the boiler 7, when the cycle has been completed, coal residues like coke are deposited; these are then removed and re-used as the energy source for subsequent treatments.

In recycling tires and rubber materials, ferrous residues are also deposited in the boiler 7 in an almost pure state; these are re-used and sent to the foundry.

Of course, while the principle of the invention remains the same, the forms of realization and the details of construction may be varied widely from that described and illustrated here, without going beyond the bounds of this invention.

Claims:

1. Device for the transformation of rubber, plastic material and organic wastes which, through a timed combustion procedure, allows the recovery of mixtures of liquid hydrocarbons and coal in a closed cycle, with no gaseous residues.

2. Procedure for the transformation as claimed in claim 1, wherein the temperature of the materials under treatment is gradually raised in 60 minutes to $400^{\circ}C$ to $600^{\circ}C$; the maximum temperature is maintained for 120 minutes in order to volatilize the gaseous components, which are then condensed in a cooling coil and collected as a mixture of liquid hydrocarbons at room temperature; the solid products obtained in the form of coal are then cooled to $120^{\circ}C$, and may be used in part for subsequent cycles.

3. Device as claimed in claim 1, characterized by metal cylinder 1, a weighing cylinder since it is placed on pins 26 and supports 27, insulating along the entire side and bottom surface, with isolating bricks 2, with grills 3 and 3' in the lower part to form a subfurnace 4 to collect ash and furnace 4' for combustion, fueled by coal and recycled gas from the previous runs; on the inside, air space 5 created along the entire side surface by the layer of firebricks 6 allows a double course for the fumes and combustion products which in this way lose their heat content to the boiler 7 before escaping; in said steel boiler the raw materials are loaded and treated thermally; the upper part of said boiler 7 contains a steel column in air space 13 cooled by means of water intake 20 and tap 21 and bearing the moveable metal bell 9, hinged on 22, water cooled by means of water intake 23 and tap 24; a circular crown tank 10 is made inside said boiler 8 to collect the product liquids, which are sent through collection tubes 11 to refrigeration systems 12 consisting of coils in a cold water bath. This cooling circuit is completely separate, with the product liquids and gases never entering it.

4. Device as claimed in claim 3, wherein at the bottom of said column 8 there may be a steel screen filter 13 filled with glass wool covered with powdered lime to capture any chlorine compounds evaporating out of the boiler 7 below, only during the treatment of certain plastic wastes.

5. Device as claimed in the previous claims, wherein the cooled liquid mixed with uncondensed gases coming from the refrigeration systems 12 reaches collection tank 14 where the components are deposited at various levels as a function of their density, while the gases flow toward the top and are collected in the transport bell 15, from where they are sent for combustion in the furnace 4'; the liquid petroleum derivatives on the other hand are sent by means of tap 16 (a valve or the like) to the storage tank for finished products, while the aqueous condensate is drawn by means of tap 17 from the bottom of tank 14, where they have precipitated due to their specific gravity.  They are then sent to the decantation tanks for subsequent re-use.